# EUROPÄISCHE PATENTSCHRIFT

(11) **EP 2 019 312 B1**
(45) Veröffentlichungstag und Bekanntmachung des Hinweises auf die Patenterteilung: **22.07.2015**
(21) Anmeldenummer: 08104093.3
(22) Anmeldetag: 26.05.2008
(51) Int. Cl.: G01N 27/28

(54) **Wechselarmatur für eine Messsonde**
Exchangeable fitting for a measuring probe
Support rétractable pour sonde de mesure

(30) Priorität: 19.07.2007 DE 102007034268
(43) Veröffentlichungstag der Anmeldung: 28.01.2009
(73) Patentinhaber: Knick Elektronische Messgeräte GmbH & Co. KG, 14163 Berlin (DE)
(72) Erfinder: Schiffer, Jens-Hendrik, 14480 Potsdam (DE)
(74) Vertreter: Hübner, Gerd

(56) Entgegenhaltungen:
- WO-A1-2004/024353
- DE-A1-102006 022 983
- DE-U1- 8 633 674
- DE-U1-202006 007 648

## Beschreibung

Die Erfindung betrifft eine Wechselarmatur für eine Messsonde zur Erfassung physikalisch-chemischer Messgrößen eines in einem Prozessbehälter befindlichen Prozessfluids, die gemäß den Merkmalen des Patentanspruchs 1 ausgebildet ist.

Eine Wechselarmatur ist eine an einen Prozessbehälter, eine Rohrleitung oder dgl. angeschlossene Vorrichtung mit in dieser geschützt und verschiebbar sowie austauschbar angeordneter Messsonde zur Messung physikalischer oder chemischer Messgrößen eines in dem Behälter befindlichen oder in der Rohrleitung strömenden Prozessfluids. In der Wechselarmatur ist eine Spül- oder Kalibrierkammer ausgebildet, die an eine Einlassöffnung zur Zuführung eines Mediums zum Spülen oder Sterilisieren oder zum Kalibrieren der Messsonde und eine Auslassöffnung zum Abführen des betreffenden Mediums angeschlossen ist. Nach einem längeren Messvorgang kann die Messsonde aus dem Prozessfluid in die Spül- oder Kalibrierkammer verfahren und in dieser gereinigt und gegebenenfalls sterilisiert oder neu kalibriert werden. Entsprechend der Form des in der Spül- oder Kalibrierkammer befindlichen Teils der Messsonde bildet sich in der Kalibrierkammer eine freie, ungerichtete Strömung des zugeführten Reinigungsmediums aus, die zwar die Messsonde erfasst, aber nicht in Ecken und Spalten im Bereich der Spül- und Kalibrierkammer gelangt. In diesen Totzonen oder toten Strömungsbereichen der Kalibrierkammer können sich Schmutz und feste Partikel aus dem Prozessmedium sammeln und schließlich Bakterien ansiedeln, so dass die - beispielsweise in der Lebensmittelindustrie so wichtigen - hygienischen Bedingungen in der Wechselarmatur wesentlich verschlechtert werden. DE202006007648U1, WO2004/024353 und DE1002006022983A1 offenbaren derartige Wechselarmaturen.

Der Erfindung liegt die Aufgabe zugrunde, eine Wechselarmatur der eingangs erwähnten Art so auszubilden, dass während des Spülprozesses deren vollständige Reinigung und Sterilisierung gewährleistet ist und damit die hygienischen Anforderungen erfüllt sind.

Erfindungsgemäß wird die Aufgabe mit einer Wechselarmatur gemäß den Merkmalen des Patentanspruchs 1 gelöst. Vorteilhafte Weiterbildungen der Erfindung ergeben sich aus den Unteransprüchen.

Kern der Erfindung ist ein im Abstand zur Innenumfangsfläche des Unterteils der Wechselarmatur für eine Messsonde angeordneter hülsenartiger Zwangsströmungskörper. Ein von diesem gebildeter Strömungsspalt ist einerseits mit der Reinigungsfluidverteilerkammer, über die ein Spülmedium zu der in einer Spül- oder Kalibrierkammer befindlichen Sondenspitze gelangt, und andererseits mit dem zwischen einer beweglichen Sondenhalterung und dem Zwangsströmungskörper erforderlichen Ringspalt verbunden. Ein Teil des Spülmediums wird somit in einer Zwangsströmung durch den Ringspalt zurück in die Spülkammer geführt, so dass auch von dem normalen Spülstrom nicht erfasste Totzonen und Spalte intensiv gereinigt werden und eine bakterielle Verunreinigung der Wechselarmatur verhindert wird.

Die Verbindung zwischen dem Strömungsspalt und dem Ringspalt erfolgt zwischen der unteren Stirnfläche des Zwangsströmungskörpers und einer zur Abdichtung gegenüber dem Prozessmedium vorgesehenen Dichtung, so dass auch im Dichtungsbereich vorhandene Verschmutzungen entfernt werden.

Die untere Stirnfläche des Zwangsströmungskörpers grenzt an die Dichtung, wobei das Spülmedium über in die Stirnfläche eingeformte radiale Nuten in den Ringspalt strömt.

Der Strömungsspalt ist zwischen der Außenfläche des Zwangsströmungskörpers und der Innenfläche des Unterteils der Wechselarmatur gebildet, wobei der Zwangsströmungskörper mittels an diesem angeformten, Durchlässe frei lassenden Anlageflächen und am Unterteil ausgebildeten Vorsprüngen radial und axial am Unterteil fixiert ist.

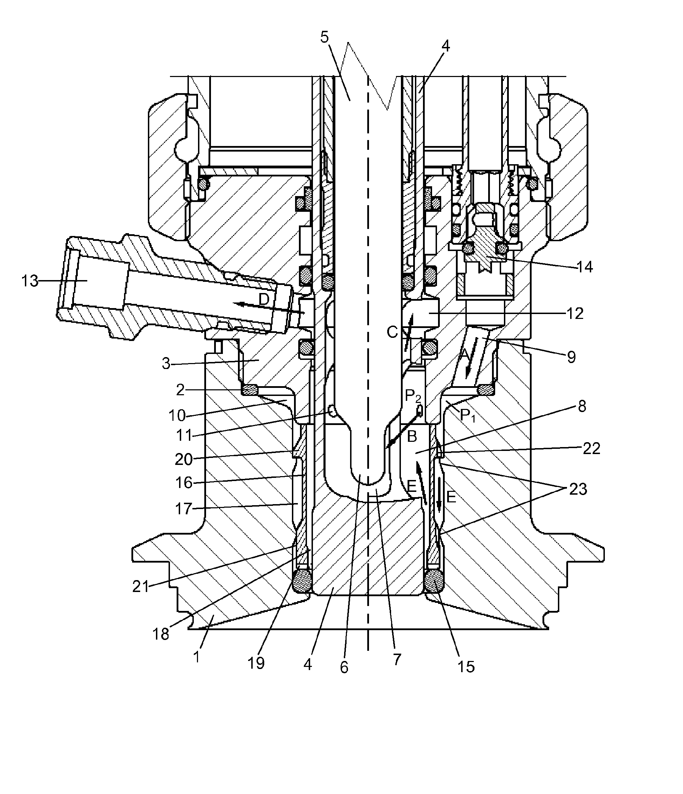

Ein Ausführungsbeispiel der Erfindung wird anhand der Zeichnung, deren einzige Figur einen Längsschnitt einer Wechselarmatur mit in dieser verschiebbar angeordneter, in der Reinigungsposition befindlicher Sondenhalterung für eine Messsonde zeigt, näher erläutert.

Die Wechselarmatur umfasst ein in der Wand eines Prozessbehälters (nicht dargestellt) befestigtes Unterteil 1 und ein mit diesem über eine Dichtung 2 abdichtend, aber lösbar verbundenes Oberteil 3. In einer im jeweils hohlzylindrischen Ober- und Unterteil in Längsrichtung verschiebbar gelagerten Sondenhalterung 4 ist eine Messsonde 5 gehalten, die sich in der vorliegenden Darstellung - bei in das Unterteil 1 der Wechselarmatur eingefahrener Lage - gerade in der Reinigungsposition befindet. In Höhe der Sondenspitze 6 der Messsonde 5 ist in der Sondenhalterung 4 eine Spülkammer 7 mit am Umfang verteilt angeordneten, an die Innenumfangsfläche des Unterteils 1 grenzenden Öffnungen 8 ausgebildet. Über die Öffnungen 8 ist während des Messbetriebes der Kontakt des Prozessmediums mit dem Sensor 6 gewährleistet. Die zwischen den Messzyklen erforderliche Reinigung der Sondenspitze 6 erfolgt mittels eines über einen Zuführungskanal 9, eine Reinigungsfluidverteilerkammer 10 und Spülbohrungen 11 in die Spülkammer 7 gemäß den Pfeilen A und B eingeführten Reinigungsfluids (Spülmedium), das gemäß den Pfeilen C und D über eine Ringkammer 12 und einen Auslasskanal 13 nach außen abgeführt wird. In den Zuführungskanal 9 ist ein Rückschlagventil 14 eingebunden.

Um auch die von dem Spülstrom nur unvollständig erreichten Totzonen in der Spülkammer und insbesondere den zwischen der Sondenhalterung 4 und dem Unterteil 1 bestehenden, bis an eine am unteren Ende des Unterteils 1 angeordnete Dichtung 15 (zwischen dem Unterteil 1 und der Sondenhalterung 4) reichenden Ringspalt 18, in dem sich bevorzugt Schmutz sammeln und Bakterien ansiedeln können, zu reinigen, ist am Innenumfang des Unterteils 1 ein hülsenförmiger Zwangsströmungskörper 16 angeordnet. Der Zwangsströmungskörper 16 kontaktiert stirnseitig zum einen das Oberteil 3 der Wechselarmatur und zum anderen die zwischen dem Unterteil 1 und der Sondenhalterung 4 vorgesehene Dichtung 15. Der Zwangsströmungskörper 16 ist so ausgebildet und dimensioniert, dass zur Innenumfangsfläche des Unterteils 1 hin ein äußerer Strömungsspalt 17 verbleibt. Zur Sondenhalterung 4 hin verbleibt der zu deren gleitender Bewegung erforderliche Ringspalt 18. Der Strömungsspalt 17 ist über an der stirnseitigen Kontaktfläche des Zwangsströmungskörpers 16 mit der Dichtung 15 im Abstand eingeformte radiale Spülnuten 19 mit dem Ringspalt 18 verbunden. Der Zwangsströmungskörper 16 ist über an dessen Außenumfangsfläche im Abstand ausgeformte Anlageflächen 20, 21 axial und radial am Innenumfang des Unterteils 1, und zwar an dort angeformten Vorsprüngen 23, abgestützt. Ein Teil des in die Reinigungsfluidverteilerkammer 10 eingebrachten Reinigungsfluids gelangt aufgrund des dort gegenüber der Spülkammer 7 herrschenden höheren Drucks (P1>P2) als Zwangsströmung über die zwischen den Anlageflächen 20 bzw. 21 frei bleibenden Durchlässe 22 in den zwischen dem Zwangsströmungskörper 16 und dem Unterteil 1 gebildeten Strömungsspalt 17 und von dort unmittelbar an der Dichtung 15 über die radialen Spülnuten 19 in den Ringspalt 18 und von dort in die Spülkammer 7. Durch die mit Hilfe des Zwangsströmungskörpers 16 bzw. des durch diesen erzeugten engen Strömungsspalts 17 sowie des oben erwähnten Druckunterschieds erzielte Zwangsströmung gemäß Pfeil E werden Ansammlungen von Schmutz und Bakterien auch in Spalten und Ecken im Bereich der Spülkammer bis an die Dichtung 15 intensiv und entsprechend den hygienischen Anforderungen gespült und gereinigt.

### Bezugszeichenliste

- 1: Unterteil der Wechselarmatur
- 2: Dichtung zw. 1 und 3
- 3: Oberteil der Wechselarmatur
- 4: Sondenhalterung
- 5: Messsonde
- 6: Sondenspitze
- 7: Spülkammer (Kalibrierkammer)
- 8: Öffnungen in 4
- 9: Zuführungskanal
- 10: Reinigungsfluidverteilerkammer
- 11: Spülbohrungen
- 12: Ringkammer
- 13: Auslasskanal
- 14: Rückschlagventil
- 15: Dichtung
- 16: Zwangsströmungskörper (-hülse)
- 17: Strömungsspalt
- 18: Ringspalt
- 19: radiale Spülnuten
- 20: Anlageflächen v. 16
- 21: Anlageflächen v. 16
- 22: Durchlässe
- 23: Vorsprünge
- Pfeil A, B: Zuführung v. Spülmedium
- Pfeil C, D: Abführung v. Spülmedium
- Pfeil E: Zwangsströmung v. Spülmedium

## Patentansprüche

1. Wechselarmatur für eine Messsonde zur Erfassung physikalisch-chemischer Messgrößen eines in einem Prozessbehälter befindlichen Prozessfluids, wobei die Sondenspitze (6) der in einer Sondenhalterung (4) gehaltenen Messsonde (5) aus einer Messposition im Prozessfluid in eine mittels einer Dichtung (15) zum Prozessfluid abgedichtete Spülposition in einer im hohlzylindrischen Unterteil (1) der Wechselarmatur gebildeten, aus einer Reinigungsfluidverteilerkammer (10) mit einem Spülmedium beaufschlagten Spülkammer (7) verfahrbar ist, **gekennzeichnet durch** einen in dem hohlzylindrischen Unterteil (1) angeordneten hülsenförmigen Zwangsströmungskörper (16) zur Ausbildung eines Strömungsspaltes (17), der zur Erzeugung einer Zwangsströmung an die Reinigungsfluidverteilerkammer (10) angeschlossen ist und mit einem zwischen der Sondenhalterung (4) und dem Zwangsströmungskörper (16) vorhandenen Ringspalt (18) verbunden ist.

2. Wechselarmatur nach Anspruch 1, **dadurch gekennzeichnet, dass** der Strömungsspalt (17) zwischen der Außenumfangsfläche des Zwangsströmungskörpers (16) und der Innenumfangsfläche des Unterteils (1) gebildet ist.

3. Wechselarmatur nach Anspruch 1, **dadurch gekennzeichnet, dass** die Verbindung zwischen dem Strömungsspalt (17) und dem Ringspalt (18) zwischen der unteren Stirnfläche des Zwangsströmungskörpers (16) und der zwischen dem Unterteil (1) und der Sondenhalterung (4) befindlichen Dichtung (15) vorgesehen ist.

4. Wechselarmatur nach Anspruch 3, **dadurch gekennzeichnet, dass** die untere Stirnfläche des Zwangsströmungskörpers (16) mit voneinander beabstandeten radialen Spülnuten (19) versehen ist und an die Dichtung (15) grenzt.

5. Wechselarmatur nach Anspruch 3, **dadurch gekennzeichnet, dass** die Verbindung zwischen dem Strömungsspalt (17) und dem Ringspalt (18) durch einen oder mehrere Durchbrüche am der Dichtung (15) zugeordnetem Ende des Zwangsströmungskörpers (16) erfolgt.

6. Wechselarmatur nach Anspruch 2, **dadurch gekennzeichnet, dass** der Zwangsströmungskörper (16) am Außenumfang - unter Freilassung von Durchlässen (22) für das Spülmedium - im Abstand angeformte Anlageflächen (20, 21) zur radialen und axialen Abstützung an am Innenumfang des Unterteils (1) ausgebildeten Vorsprüngen (23) aufweist.

7. Wechselarmatur nach Anspruch 1, **dadurch gekennzeichnet, dass** der hülsenförmige Zwangsströmungskörper (16) mit seiner oberen Stirnfläche an ein abdichtend mit dem Unterteil (1) verbundenes Oberteil (3) der Wechselarmatur anschließt, wobei die Reinigungsfluidverteilerkammer (10) zwischen dem Oberteil (3) und dem Unterteil (1) gebildet ist.

## Claims

1. Exchangeable fitting for a measuring probe to detect physical-chemical measuring variables of a process fluid located in a process vessel, wherein the probe tip (6) of the measuring probe (5) held in a probe holder (4) is displaceable from a measuring position in the process fluid into a rinsing position, sealed from the process fluid by means of a seal (15), in a rinsing chamber (7) formed in the hollow cylindrical lower part (1) of the exchangeable fitting, the rinsing chamber (7) being exposed to a rinsing medium from a cleaning fluid distribution chamber (10), **characterized by** a sleeve-shaped forced-flow body (16) arranged in the hollow cylindrical lower part (1) such as to form a flow gap (17), the flow gap (17) being connected to the cleaning fluid distribution chamber (10) to bring about a forced flow and to an annular gap (18) located between the probe holder (4) and the forced-flow body (16).

2. Exchangeable fitting according to claim 1, **characterized in that the** flow gap (17) is formed between the outer peripheral surface of the forced-flow body (16) and the inner peripheral surface of the lower part (1).

3. Exchangeable fitting according to claim 1, **characterized in that** the connection between the flow gap (17) and the annular gap (18) is provided between the lower front face of the forced-flow body (16) and the seal (15) provided between the lower part (1) and the probe holder (4).

4. Exchangeable fitting according to claim 3, **characterized in that** the lower front face of the forced-flow body (16) is provided with spacedapart radial rinsing grooves (19) and abuts against the seal (15).

5. Exchangeable fitting according to claim 3, **characterized in that** the connection between the flow gap (17) and the annular gap (18) is established by one or several breakthroughs at the end of the forced-flow body (16) associated to the seal (15).

6. Exchangeable fitting according to claim 2, **characterized in that** the forced-flow body (16) is provided with contact faces (20, 21) formed at a distance therefrom such as to form passages (22) for the rinsing medium, the contact faces (20, 21) being radially and axially supported against protrusions (23) formed on the inner periphery of the lower part (1).

7. Exchangeable fitting according to claim 1, **characterized in that** the sleeve-shaped forced-flow body (16) adjoins with its upper front face an upper part (3) of the exchangeable fitting connected to the lower part (1) in a sealing manner, with the cleaning fluid distribution chamber (10) being formed between the upper part (3) and the lower part (1).

## Revendications

1. Support rétractable pour sonde de mesure destinée à la saisie de grandeurs de mesures physicochimiques d'un fluide de traitement se trouvant dans un récipient de traitement, où la pointe de sonde (6) d'une sonde de mesure (5) maintenue par un support de sonde (4) peut se déplacer à partir d'une position de mesure dans le fluide de traitement vers une position de lavage, séparée de manière étanche du fluide de traitement au moyen d'un joint (15), dans une chambre de distribution de fluide de nettoyage (10), constituant la partie inférieure (1) en forme de cylindre creux du support rétractable, avec une chambre de lavage (7) équipée d'un milieu de lavage, **caractérisé par** un corps d'écoulement forcé (16) en forme de fourreau disposé dans la partie inférieure (1) en forme de cylindre creux pour la formation d'une fente d'écoulement (17) qui est en communication avec la chambre de distribution de fluide de nettoyage (10) pour la génération d'un écoulement forcé et qui reliée avec une fente annulaire (18) située entre le support de sonde (4) et le corps d'écoulement forcé (16).

2. Support rétractable selon la revendication 1, **caractérisé en ce que** la fente d'écoulement (17) est formée entre la surface externe périphérique du corps d'écoulement forcé (16) et la surface interne périphérique de la partie inférieure (1).

3. Support rétractable selon la revendication 1, **caractérisé en ce que** la liaison entre la fente d'écoulement (17) et la fente annulaire (18) est prévue par un joint (15) se trouvant entre la surface frontale inférieure du corps d'écoulement forcé (16) et entre la partie inférieure (1) et le support de sonde (4).

4. Support rétractable selon la revendication 3, **caractérisé en ce que** la surface frontale inférieure du corps d'écoulement forcé (16) est munie de rainures de lavage (19) radiales espacées les unes des autres et est limitrophe avec le joint (15).

5. Support rétractable selon la revendication 3, **caractérisé en ce que** la liaison entre la fente d'écoulement (17) et la fente annulaire (18) est effectuée par un ou plusieurs passages sur l'extrémité du corps d'écoulement forcé (16) associée au joint (15).

6. Support rétractable selon la revendication 2, **caractérisé en ce que** le corps d'écoulement forcé (16) présente, sur le périmètre extérieur, en laissant des passages (22) libres pour le milieu de lavage, des surfaces d'appui (20, 21) surmoulées avec un espace par rapport à l'appui radial et axial des parties en saillie (23) formées sur le périmètre intérieur de la partie inférieure (1).

7. Support rétractable selon la revendication 1, **caractérisé en ce que** le corps d'écoulement forcé (16) en forme de fourreau est adjacent par sa surface frontale avec une partie supérieure (3) du support rétractable reliée de manière étanche avec la partie inférieure (1), la chambre de distribution de fluide de nettoyage (10) étant formée entre la partie supérieure (3) et la partie inférieure (1).
